# EUROPEAN PATENT APPLICATION

(11) **EP 4 190 875 A1**
(43) Date of publication of application: **07.06.2023**
(21) Application number: 20947783.5
(22) Date of filing: 28.07.2020
(51) Int. Cl.: C09D 201/00, C09D 7/61, C09D 7/65, F28F 13/18, F28F 17/00

(54) **COATING COMPOSITION FOR HEAT EXCHANGER**

(71) Applicant: MITSUBISHI ELECTRIC CORPORATION, Chiyoda-ku Tokyo 100-8310 (JP)
(72) Inventor: YOSHIDA, Yasuhiro, Tokyo 100-8310 (JP)
(74) Representative: Meissner Bolte Partnerschaft mbB
(86) International application number: PCT/JP2020/028928
(87) International publication number: WO 2022/024227

(57) **Abstract**

A heat exchanger coating composition includes an aqueous dispersion having a water-repellent resin containing spherical particles with an average particle size of 2 µm or more and 50 µm or less.

## Description

### TECHNICAL FIELD

The present invention relates to a heat exchanger coating composition used for heat exchangers.

### BACKGROUND ART

In the related art, heat exchanger coating compositions have been used to treat the surfaces of heat exchangers in air conditioners and other devices. In the process of developing air conditioners, air conditioners have been modified to, for example, have higher cooling and heating efficiency and improve the comfort of the air-conditioned environment. However, heat exchangers face challenges in treating condensate water generated during cooling operation. The accumulation of condensate water in spaces between fins of heat exchangers increases airflow resistance to reduce cooling efficiency. To solve this issue, techniques for hydrophilizing the surfaces of fins have been proposed in the related art. The fins are made of, for example, aluminum.

Patent Document 1 discloses a hydrophilic metal surface treatment agent containing a water-soluble resin and a hydrophilic substance, such as colloidal silica. In Patent Document 1, the hydrophilized surfaces of aluminum fins cause the condensate water to flow away from the surfaces of the fins without deforming into water droplets. Patent Document 2 discloses a water-repellent coating composition including hydrophobized inorganic fine particles and a solution containing a silicone resin compound or a fluororesin compound. When the water-repellent coating composition in Patent Document 2 is applied to the surface of a heat exchanger, the surface of the heat exchanger has high water repellency so that condensate water rolls down from the surface.

### CITATION LIST

### PATENT DOCUMENT

Patent Document 1: Japanese Unexamined Patent Application Publication JP 6-264001 A
Patent Document 2: Japanese Unexamined Patent Application Publication JP 3-244680 A

### SUMMARY OF THE INVENTION

### TECHNICAL PROBLEM

However, the hydrophilicity of the surface hydrophilized with the hydrophilic metal surface treatment agent disclosed in Patent Document 1 tends to be degraded by contamination or other factors. Local hydrophilization of the surface may cause accumulation of water droplets or spread of accumulated water droplets through air flow. In addition, hydrophilic substances tend to adsorb odorous substances and may release odors during cooling operation. The water-repellent coating composition disclosed in Patent Document 2 causes condensate water to roll down but, when dust is attached to the surface or the surface deteriorates, water droplets may form on the surface. For this, the surface treatment exhibits low durability.

The present invention has been made to solve the above problem and is directed to a heat exchanger coating composition that improves drainage without imparting hydrophilicity or high water repellency.

### SOLUTION TO THE PROBLEM

A heat exchanger coating composition according to an embodiment of the present invention includes an aqueous dispersion having a water-repellent resin containing spherical particles with an average particle size of 2 µm or more and 50 µm or less.

### ADVANTAGEOUS EFFECTS OF THE INVENTION

According to an embodiment of the present invention, a heat exchanger coating composition includes an aqueous dispersion having a water-repellent resin containing spherical particles with an average particle size of 2 µm or more and 50 µm or less. When the heat exchanger coating composition is applied to the surface of a heat exchanger, a coating film is formed on the surface of the heat exchanger. The coating film does not have hydrophilicity but has appropriate water repellency. The heat exchanger coating composition can improve the drainage of the heat exchanger without imparting hydrophilicity or high water repellency.

### BRIEF DESCRIPTION OF THE DRAWINGS

- FIG. 1: is a perspective view of a heat exchanger according to Embodiment 1.
- FIG. 2: is a cross-sectional view of a fin according to Comparative Example.
- FIG. 3: is a perspective view of the fin according to Embodiment 1.
- FIG. 4: is a perspective view of the fin according to Embodiment 1.
- FIG. 5: is a perspective view of water droplets on the fin according to Embodiment 1.
- FIG. 6: is a perspective view of the fin according to Embodiment 1.
- FIG. 7: is a cross-sectional view of a fin according to Comparative Example.

### DESCRIPTION OF EMBODIMENTS

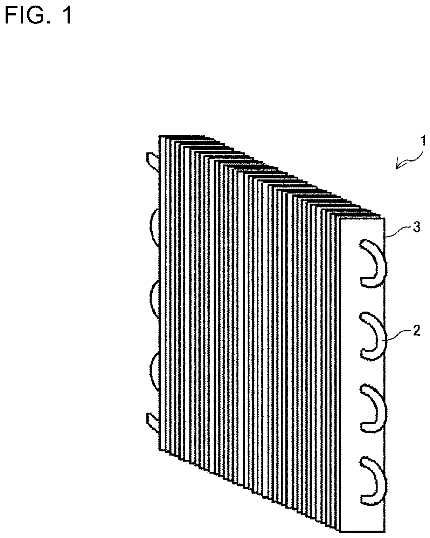

An embodiment of a heat exchanger coating composition according to the present invention will be described below with reference to the drawings. The present invention is not limited by the embodiment described below. The relationship between the sizes of components in the following drawings including FIG. 1 may be different from the actual one. In the following description, the terms expressing directions are appropriately used for easy understanding of the present invention. These terms are used to describe the present invention and do not limit the present invention. Examples of the terms expressing directions include "upper", "lower", "right", "left", "front", and "back".

### Embodiment 1

FIG. 1 is a perspective view of a heat exchanger 1 according to Embodiment 1. The heat exchanger 1 exchanges heat, for example, between refrigerant and air. In Embodiment 1, the heat exchanger 1 is a fin tube heat exchanger. The heat exchanger 1 includes a heat transfer tube 2 and a fin 3. The heat transfer tube 2 is a tube in which refrigerant flows. A plurality of the heat transfer tubes 2 is arranged and made of aluminum or an aluminum alloy. Embodiment 1 illustrates a case where each heat transfer tube 2 is a circular tube having a circular cross-section and including, inside thereof, one flow passage through which refrigerant flows. Each heat transfer tube 2 may be a flat tube having a flat cross-section and including, inside thereof, a plurality of flow passages through which refrigerant flows.

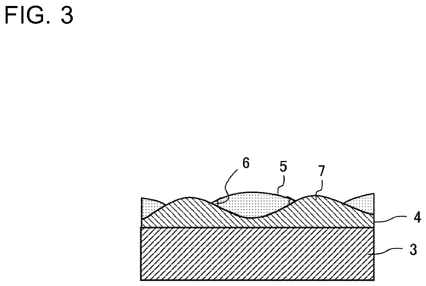

The fin 3 is a member that transmits the heat of the refrigerant flowing in the heat transfer tubes 2. The fin 3 is made of aluminum or an aluminum alloy. Embodiment 1 illustrates a case where the fin 3 is a plate fin having the heat transfer tubes 2 passing through holes formed in advance. The fin 3 may be, for example, a corrugated fin that is folded between the heat transfer tube 2 and the heat transfer tube 2. Since the fin 3 is made of aluminum with high thermal conductivity and has a wide area, the heat exchange is efficiently performed between refrigerant and air. The heat exchanger coating composition is applied to the fin 3 to form a coating film 4 (see FIG. 3).

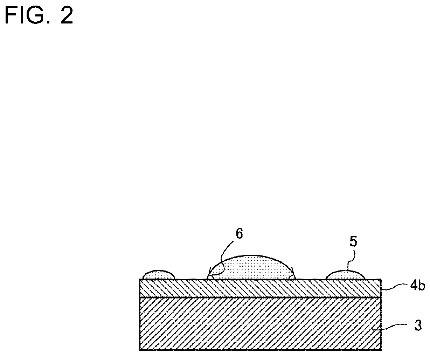

FIG. 2 is a cross-sectional view of the fin 3 according to Comparative Example. Next, the coating film 4 formed on the fin 3 according to Embodiment 1 will be described. For easy understanding of the coating film 4 of the fin 3 according to Embodiment 1, a coating film 4b formed on the fin 3 according to Comparative Example will be first described. Referring to FIG. 2, the flat coating film 4b is formed on the fin 3 according to Comparative Example. When condensate water 5 forms on the surface of the coating film 4b of the fin 3 according to Comparative Example, the condensate water 5 forms at a certain contact angle 6 determined depending on the type of resin that constitutes the coating film 4b. The contact angle 6 is an angle between the water-repellent resin 10 and water at an endpoint of water. The contact angle 6 of the resin that constitutes the coating film 4b is generally 40 degrees or more and 120 degrees or less. In this case, the condensate water 5 forms as semi-spherical water droplets to cause a phenomena called bridging in which water accumulates between adjacent fins 3 in the heat exchanger 1. This phenomena may increase airflow resistance or may cause water droplets to spread out through the air current.

FIG. 3 is a cross-sectional view of the fin 3 according to Embodiment 1. Next, the coating film 4 formed on the fin 3 according to Embodiment 1 will be described. Referring to FIG. 3, the heat exchanger coating composition is applied to the fin 3 to form the coating film 4 having unevenness. Since the surface of the coating film 4 is inclined, the direction normal to the surface is inclined. Therefore, when the condensate water 5 forms on the surface, the apparent contact angle 6 decreases as the direction normal to the surface is inclined. The surface curvature of the condensate water 5 decreases accordingly, so that the height of water droplets is unlikely to increase. Accordingly, the condensate water 5 spreads differently depending on whether the surface of the coating film 4 has unevenness when the condensate water 5 forms on the surface.

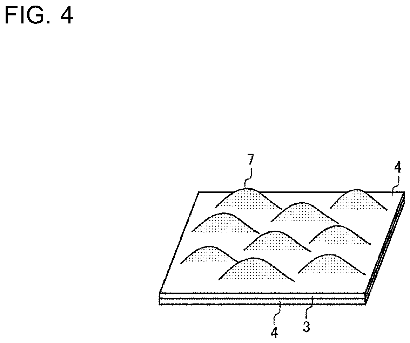

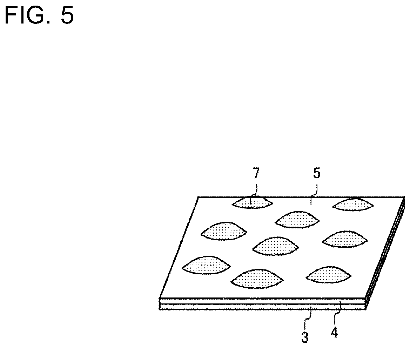

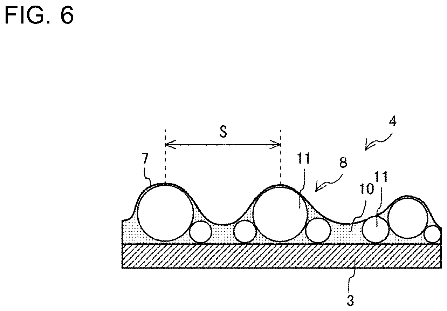

FIG. 4 is a perspective view of a fin 3 according to Embodiment 1. FIG. 5 is a perspective view of water droplets on the fin 3 according to Embodiment 1. Referring to FIG. 4, the coating film 4 made of the heat exchanger coating composition has unevenness formed by enclosed spherical particles 11 (see FIG. 6). Referring to FIG. 4, many protrusions 7 are distributed on the entire surface of the coating film 4 so that the coating film 4 has unevenness. In other words, recesses are formed in a mesh pattern. Referring to FIG. 5, the condensate water 5 spreads to fill the recesses formed in a mesh pattern when a large amount of the condensate water 5 forms on the coating film 4. This forms a wet film. The condensate water 5 can spread in a wet manner even when the heat exchanger coating composition has a water-repellent resin. Therefore, the heat exchanger 1 has high drainage.

An advantage of formation of the wet surface on the surface of the heat exchanger 1 in terms of the water-repellent resin 10 will be described. When a wet surface is formed on the heat exchanger 1 by hydrophilization with a hydrophilic substance, the hydrophilic substance easily adsorbs various substances in air to generate the possibility of odor adsorption or decrease in hydrophilicity. The odor adsorption causes generation of unpleasant odors from the air conditioner during, for example, cooling operation. The decrease in hydrophilicity results in low drainage and leads to low efficiency of heat exchange or spread-out of water droplets through the air current. In Embodiment 1, the wet surface is formed only by the water-repellent resin 10 (see FIG. 6), which eliminates the problems described above. In other words, there is no odor generation resulting from odor adsorption or no decrease in drainage cause by contamination.

Furthermore, the coating film 4 of Embodiment 1 has high corrosion resistance. Since the surface of the fin 3 made of aluminum is oxidized by water permeating through the coating film 4, the surface of the fin 3 needs to undergo a chemical conversion treatment or an anti-corrosion treatment, such as anti-corrosion coating. The coating film 4 of Embodiment 1 is made of the water-repellent resin 10 having low moisture permeability and having corrosion resistance, and the anti-corrosion treatment may thus be simplified or omitted.

FIG. 6 is a cross-sectional view of the fin 3 according to Embodiment 1. The heat exchanger coating composition includes an aqueous dispersion 8 having a water-repellent resin 10 containing spherical particles 11 with an average particle size of 2 µm or more and 50 µm or less. Referring to FIG. 6, the spherical particles 11 are substantially arranged side by side with little overlap in the coating film 4. The spherical particles 11 form unevenness on the surface made of the water-repellent resin 10. In the coating film 4 illustrated in FIG. 6, the condensate water 5 is held in the recesses formed by the spherical particles 11 to form a wet surface, whereby the heat exchanger 1 having high drainage is obtained. Since the spherical particles 11 are strongly fixed to the fin 3 with the water-repellent resin 10, the coating film 4 has high resistance to friction and collision. Being thin, the coating film 4 has an advantage that it is unlikely to inhibit heat transfer from the fin 3 to the air on the surface of the heat exchanger 1.

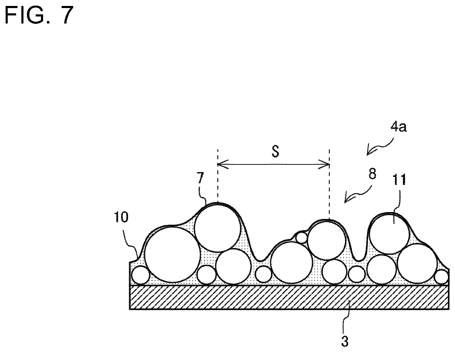

FIG. 7 is a cross-sectional view of a fin 3 according to Comparative Example. Referring to FIG. 7, the fin 3 according to Comparative Example is more thickly coated with the heat exchanger coating composition than that in FIG. 6. A large amount of spherical particles 11 overlap one another to form large unevenness on the surface. In a thick coating film 4a illustrated in FIG. 7, condensate water 5 is held in the recesses formed by the spherical particles 11 as in FIG. 6. However, the recesses are deeper, and the wet surface formed by the condensate water 5 is more stable. When this coating film is used for the heat exchanger 1, the heat exchanger 1 is less susceptible to environmental changes, such as temperature and humidity, and can stably maintain high drainage. In both the cases in FIG. 6 and FIG. 7, the spherical particles 11 are covered by the water-repellent resin 10 and not exposed on the surface of the coating film 4. For this, the hydrophilic substance is not exposed on the surface of the coating film 4 even if the hydrophilic spherical particles 11 are used.

The spherical particles 11 have an average particle size of 2 µm or more and 50 µm or less as described above. The spherical particles 11 more preferably have an average particle size of 4 µm or more and 20 µm or less. The average particle size refers to a number-average particle size of particles excluding fine particles having a particle size of 1 µm or less. If the average particle size is less than 2 µm, the unevenness on the formed surface is too fine to form a wet surface. If the particles have an average particle size of more than 50 µm, it is difficult to form the coating film 4 in which the spherical particles 11 are evenly distributed, and application of the heat exchanger coating composition to the heat exchanger 1 does not provide good drainage.

The spherical particles 11 are, for example, inorganic particles. The inorganic particles are, for example, fused silica or fused alumina. The spherical particles 11 are metal particles. The metal particles are made of, for example, iron, nickel, cobalt, silver, aluminum, copper, or an alloy thereof. Furthermore, the spherical particles 11 are produced by using, for example, fused silica or fused alumina for inorganic particles, or by atomization or other methods for metal particles. The spherical particles preferably have a dense composition, which is solid and not porous. When particles not being spherical but having corners or porous particles are mixed with the water-repellent resin 10 to form the coating film 4, the particles not covered by the water-repellent resin 10 tend to be exposed on the surface of the coating film 4. For use as the heat exchanger 1, the exposed particles may spread to change the physical properties of the coating film 4 or to cause adsorption of odors. The spherical particles 11 preferably have high thermal conductivity. When the coating film 4 of the heat exchanger 1 has low thermal conductivity, the coating film 4 degrades the function of the heat exchanger 1. The inorganic particles having high thermal conductivity not only prevent a decrease in the function of the heat exchanger 1 but also increase the surface area to improve the function of the heat exchanger 1.

The spherical particles 11 may be resin particles. The resin particles are made of, for example, methacrylic resin, polystyrene resin, silicone resin, or phenolic resin. In the case of using the resin particles, the coating film 4 has high flexibility and is thus unlikely to undergo defects, such as peeling. In addition, the spherical particles 11 are difficult to settle and therefore easily used in the heat exchanger coating composition.

The contact angle 6 of water on the water-repellent resin 10 is 30 degrees or more and 100 degrees or less. The contact angle 6 is more preferably 40 degrees or more and 80 degrees or less. If the contact angle 6 of water is less than 30 degrees, the hydrophilicity of the surface of the coating film 4 is too high, and high drainage is obtained in the initial stage of use as the heat exchanger 1. However, the hydrophilicity tends to decrease due to contamination or other factors, and the hydrophilicity may become uneven so that the drainage may decrease. If the contact angle 6 of water is more than 100 degrees, the water repellency is so high that a wet surface may not be formed even when unevenness is formed on the surface.

The water-repellent resin 10 is, for example, alkyd resin, urethane resin, polyolefin resin, polyvinyl chloride resin, ester resin, epoxy resin, acrylic resin, silicone resin, or fluororesin. The water-repellent resin 10 may be a mixture of these resins.

The heat exchanger coating composition is a dispersion of the water-repellent resin 10 in water. To disperse the resin, for example, a dispersant, such as a surfactant, or an organic solvent may be used. When the heat exchanger coating composition including an organic solvent as a base is applied to the heat exchanger 1, it is difficult to adjust the flowability or the evaporation rate to make the internal fine structure uniform. As in Embodiment 1, the aqueous dispersion 8 can be a liquid with low viscosity and low volatility and can thus be applied to the heat exchanger 1 by a simple means, such as dipping.

The average value of distances S between the tops of the spherical particles 11 is 2 µm or more and 500 µm or less. As illustrated in FIG. 6 and FIG. 7, the unevenness on the surface of the coating film 4 changes depending on the particle size or planar distribution of the spherical particles 11. The condition of the unevenness can be defined by using the distances S between the tops of the protrusions 7 formed by the spherical particles 11. For the spherical particles 11 arranged in one layer as illustrated in FIG. 6, the distances S refer to distances between the tops of the protrusions 7 formed by particles having larger particle sizes than the average particle size. For the spherical particles 11 stacked on top of one another as illustrated in FIG. 7, the distances S refer to distances between the tops of the protrusions 7 formed by particles having larger particle sizes than the average particle size among the spherical particles 11 located in the stack top layer. The average particle size refers to a number-average particle size of particles excluding fine particles having a particle size of 1 µm or less.

The average value of distances S between tops of the spherical particles 11 is more preferably 4 µm or more and 100 µm or less. If the average value of the distances S is less than 2 µm, the surface of the coating film 4 tends to have high water repellency, and a wet film cannot be formed in many cases. If the average value of the distances S is more than 500 µm, it is difficult to form a uniform wet film, which is not preferred.

The amount of the spherical particles 11 added is 30 mass% or more and 200 mass% or less relative to the water-repellent resin 10 when the spherical particles 11 are inorganic particles or resin particles. The amount of the spherical particles 11 added is more preferably 40 mass% or more and 150 mass% or less relative to the water-repellent resin 10. If the amount of the spherical particles 11 added is less than 30 mass% and, in particular, the heat exchanger coating composition is applied as a thin film, the spherical particles 11 are sparsely distributed and do not produce unevenness that can form a wet film composed of condensate water. If the amount of the spherical particles 11 added is more than 200 mass%, the water-repellent resin 10, which functions as a binder, is so little that the particles are easily detached or the particles are not sufficiently covered by the water-repellent resin 10, which is not preferred. For metal particles, the amount of the spherical particles 11 added is 50 mass% or more and 1000 mass% or less relative to the water-repellent resin 10. The amount of the spherical particles 11 added is more preferably 100 mass% or more and 800 mass% or less relative to the water-repellent resin 10. If the amount of the spherical particles 11 added is less than 50 mass% and, in particular, the heat exchanger coating composition is applied as a thin film, the spherical particles 11 are sparsely distributed and do not produce unevenness that can form a wet film composed of condensate water. If the amount of the spherical particles 11 added is more than 1000 mass%, the water-repellent resin 10, which functions as a binder, is so little that the particles are easily detached or the particles are not sufficiently covered by the water-repellent resin 10, which is not preferred.

The amount of the spherical particles 11 and the water-repellent resin 10 added is 5 mass% or more and 40 mass% or less relative to the total mass of the coating composition. The amount of the spherical particles 11 and the water-repellent resin 10 added is more preferably 10 mass% or more and 30 mass% or less relative to the total mass of the coating composition. If the amount of the spherical particles 11 and the water-repellent resin 10 added is 5 mass% or less, for example, the obtained coating film 4 is so thin that it is easy to peel off, and the coating film 4 fails to have sufficient durability. If the amount of the spherical particles 11 and the water-repellent resin 10 added is more than 40 mass%, the heat exchanger coating composition is so viscous that it is difficult to apply the heat exchanger coating composition to the heat exchanger 1, or the coating film 4 is so thick that it degrades the performance of the heat exchanger 1.

The aqueous dispersion 8 may further include a thickener that increases viscosity. The addition of a very small amount of the thickener to the aqueous dispersion 8 improves the coating properties of the heat exchanger coating composition on the heat exchanger 1. The heat exchanger coating composition needs to be uniformly applied to the surface of the complex structure of the heat exchanger 1. The spherical particles 11 tend to be unevenly distributed while the applied heat exchanger coating composition flows as a liquid film on the surface of the heat exchanger 1. The addition of a very small amount of the thickener to the heat exchanger coating composition allows uniform distribution of the spherical particles 11. Examples of the thickener include water-soluble polymers, such as polyacrylic acid and polyethylene glycol, and polysaccharide thickeners, such as carboxymethyl cellulose, hydroxyethyl cellulose, xanthan gum, guar gum, locust bean gum, carrageenan, and tamarind gum.

Suitable thickeners among these thickeners include polysaccharides having pseudo-plastic properties, such as xanthan gum and guar gum. A dispersion containing these thickeners exhibits high flowability when the excess dispersion applied to the heat exchanger 1 is shaken off, and the liquid film of the dispersion exhibits low flowability during drying. The coating film 4 in which the spherical particles 11 are uniformly dispersed can be thus formed on the heat exchanger 1 having a complex shape. The addition of a very small amount of xanthan gum or guar gum can still impart good pseudo-plastic properties. When a large amount of the thickener being a hydrophilic substance is added, the proportion of the hydrophilic substance in the coating film 4 increases, and the drainage of the heat exchanger 1 may degrade due to contamination and deterioration. In Embodiment 1, a very small amount of xanthan gum or guar gum is added, which can avoid a decrease in drainage.

The amount of the thickener added is preferably 0.01 mass% or more and 1 mass% or less when the thickener is xanthan gum or guar gum. The amount of the thickener added is more preferably 0.02 mass% or more and 0.2 mass% or less when the thickener is xanthan gum or guar gum. The addition of less than 0.01 mass% of the thickener is not effective in adjusting the viscosity. The addition of more than 1 mass% of the thickener results in not only excessive viscosity but also easy deterioration of the coating film 4, which is not preferred.

### Application Method

Next, a method for applying the heat exchanger coating composition to the heat exchanger 1 will be described. Examples of the method for applying the heat exchanger coating composition to the heat exchanger 1 include two methods. A first method is a pre-coating method in which the heat exchanger 1 is assembled after the heat exchanger coating composition is applied to the components of the heat exchanger 1, such as the fin 3 made of aluminum. The pre-coating method mainly uses a roll coater to apply the heat exchanger coating composition to the fin 3 made of aluminum. Since the heat exchanger coating composition of Embodiment 1 includes the water-repellent resin 10 and the spherical particles 11, this coating composition prevents or reduces mold wear, which is a problem associated with the coating film 4 containing the water-repellent resin 10 and an inorganic substance, such as silica, which has been the mainstream in recent years.

A second method is a post-coating method in which the heat exchanger coating composition is applied to the assembled heat exchanger 1. Examples of the post-coating method include dipping of the heat exchanger 1 in the heat exchanger coating composition, or spraying or pouring of the heat exchanger coating composition on the heat exchanger 1. In both of the methods, the surface of the heat exchanger 1 is wetted with the heat exchanger coating composition, and the excess heat exchanger coating composition is then removed, followed by drying. The excess heat exchanger coating composition is removed by free fall by gravity, or by shaking off using the inertial force generated by vibration or rotational motion.

The drying may involve leaving the heat exchanger 1 to stand for natural drying, or may involve blowing air to accelerate drying. The drying preferably involves heating the heat exchanger 1 with hot air or infrared radiation. The heat exchanger coating composition is assuredly dried with heating at 60 degrees Celsius or higher, which can prevent generation of microorganisms, such as molds. The strength of the coating film 4 increases or the water resistance increases with heating at 100 degrees Celsius or higher, preferably 130 degrees Celsius or higher.

According to Embodiment 1, the heat exchanger coating composition includes the aqueous dispersion 8 having the water-repellent resin 10 containing the spherical particles 11 with an average particle size of 2 µm or more and 50 µm or less. The coating film 4 is formed on the surface of the heat exchanger 1 by applying the heat exchanger coating composition to the surface of the heat exchanger 1. The coating film 4 does not have hydrophilicity but has appropriate water repellency. The heat exchanger coating composition can accordingly improve the drainage of the heat exchanger 1 without imparting hydrophilicity or high water repellency.

### Examples

Embodiment 1 will be specifically described below by way of Examples, but Embodiment 1 is not limited to Examples described below.

### Examples 1 to 7 and Comparative Examples 1 to 4

As the water-repellent resin 10, a coating liquid was prepared by mixing 10 mass% polyurethane dispersion UW-5002E (available from Ube Industries, Ltd.), 0.2 mass% polyoxyethylene lauryl ether as a surfactant, 0.1 mass% xanthan gum (ECHO GUM, available from DSP Gokyo Food & Chemical Co., Ltd.) as a thickener, and the spherical particles 11 at the composition shown in Table 1. The coating liquid was applied to a glass plate with a thickness of 10 mm by using a spray and dried at 130 degrees Celsius for 10 minutes. The particle size of the spherical particles 11 was adjusted by appropriately mixing fused silica (available from Denka Corporation), silica spherical fine particles SO-C (available from Admatechs), and metal particles PF-10R (available from Epson Atmix Corporation) before use. The glass plate after application was cooled to -10 degrees Celsius and set in a saturated water vapor environment at 80 degrees Celsius such that the application surface was vertical, and the wet condition of the surface was observed. The condition of the condensate water 5 after about 5 minutes is shown in Table 1.

**Table 1]**

| | Spherical particles | Average particle size | Addition amount * | Contact angle | Condition of condensate water | Note |
|---|---|---|---|---|---|---|
| Example 1 | silica | 2.5 µm | 100 mass% | 95° | wet surface | |
| Comparative Example 1 | silica | 1.8 µm | 100 mass% | 102° | small water droplets formed | small particle size |
| Example 2 | silica | 5 µm | 100 mass% | 78° | wet surface | |
| Example 3 | silica | 15 µm | 50 mass% | 75° | wet surface | |
| Example 4 | silica | 15 µm | 150 mass% | 76° | wet surface | |
| Comparative Example 2 | silica | 15 µm | 20 mass% | 75° | water droplets formed | few spherical particles |
| Example 5 | alumina | 12 µm | 100 mass% | 79° | wet surface | |
| Example 6 | silica | 40 µm | 100 mass% | 72° | wet surface in mesh pattern | |
| Comparative Example 3 | silica | 55 µm | 100 mass% | 75° | water droplets formed | large particle size |
| Comparative Example 4 | none | - | 0 mass% | 75° | water droplets formed | no spherical particles |
| Example 7 | metal | 5 µm | 300 mass% | 74° | wet surface | |

| | | | | | | |
|---|---|---|---|---|---|---|
| * the proportion to the water-repellent resin | | | | | | |

In Examples 1 to 7 and Comparative Examples 2 and 3, the contact angle 6 of water is the same as that in Comparative Example 4 free of the spherical particles 11. The contact angle 6 is measured by a method in which water droplets with a diameter of about 3 mm are formed. In other words, this result indicates that the addition of the spherical particles 11 does not change the water repellency of the surface. In Comparative Example 1, the contact angle 6 is 102 degrees, which shows high water repellency. Fine unevenness formed by spherical silica with a small particle size is shown to have an effect of increasing water repellency. The condition of the condensate water 5 is such that the condensate water 5 forms a wet surface in Examples 1 to 5 and 7. In Example 6, a wet surface is formed, but a water film is formed in a mesh pattern in which the protrusions 7 formed by fused silica are distributed in dots without wetting. In all of Examples, the surface of the applied coating film 4 has water repellency, but a water film is formed on the surface of the coating film 4, and water flows down. When Examples are applied to the surface of the heat exchanger 1, the heat exchanger 1 is expected to have high drainage as in the case of the hydrophilic coating film 4.

In Comparative Examples 2 to 4, the condensate water 5 is in the form of water droplets, large water droplets flow down by gravity, but water droplets with diameters of 3 to 6 mm remain on the surface. When Comparative Examples 2 to 4 are applied to the surface of the heat exchanger 1, it may be difficult to discharge the condensate water 5, and the airflow resistance may increase. In Comparative Example 1, largely grown water droplets slid off, but countless numbers of small water droplets remain. When Comparative Example 1 is applied to the surface of the heat exchanger 1, it may also be difficult to discharge the condensate water 5, and the airflow resistance may increase.

### Examples 8 and 9 and Comparative Examples 5 to 8

Examples 8 and 9 were produced by applying the coating liquids used in Examples 2 and 4 on aluminum plates by using a spray and drying the coating liquids with heating at 130 degrees Celsius for 10 minutes. Comparative Example 5 was produced by mixing 5 mass% colloidal silica ST-PS-S (available from Nissan Chemical Corporation), 3 mass% acrylic emulsion, 0.2 mass% polyoxyethylene lauryl ether as a surfactant, 0.1 mass% xanthan gum (ECHO GUM, available from DSP Gokyo Food & Chemical Co., Ltd.) as a thickener to prepare a coating liquid; applying the coating liquid on an aluminum plate by using a spray; and drying the coating liquid with heating at 100 degrees Celsius for 10 minutes. Comparative Example 6 was prepared by adding spherical silica to Comparative Example 5. Comparative Example 7 was prepared by applying polysilazane (AQUAMICA NP140, available from AZ Electronic Materials) on an aluminum plate by using a spray, and leaving the aluminum plate to stand at normal temperature for about 2 weeks to form a silica film. Comparative Example 8 was prepared by adding spherical silica to Comparative Example 7.

The samples of Examples 8 and 9 and Comparative Examples 5 to 8 were evaluated for water repellency and odor adsorption resulting from contamination. Each sample was contaminated by placing, in a 2-L glass container, a small piece of each sample, 30 mm × 50 mm together with nonwoven fabric impregnated with equal amounts of α-pinene, nonenal, and butyl acetate, and leaving each container to stand under heating at 40 degrees Celsius for 6 hours. The effect of contamination was determined on the basis of the amount of change in the contact angle 6 of water before and after contamination. The odor adsorption was quantified by five monitors sniffing the test pieces. Each monitor evaluated odor adsorption on a five-point scale from 1 (no odor) to 5 (strong odor), and the average value was calculated. The results are shown in Table 2.

**Table 2]**

| | Coating film | Spherical particles | Average particle size | Addition amount * | Contact angle before contamination | Contact angle after contamination | Odor adsorption | Note |
|---|---|---|---|---|---|---|---|---|
| Example 8 | water-repellent resin film | fused silica | 5 µm | 100 mass% | 78° | 76° | 1.4 | |
| Example 9 | water-repellent resin film | fused silica | 15 µm | 150 mass% | 76° | 78° | 1.6 | |
| Comparative Example 5 | organic-inorganic hydrophilic film | none | - | 0% | 30° | 67° | 3.8 | |
| Comparative Example 6 | organic-inorganic hydrophilic film | fused silica | 15 µm | 150 mass% | 27° | 68° | 4.0 | |
| Comparative Example 7 | inorganic hydrophilic film | none | - | 0% | 12° | 72° | 3.4 | |
| Comparative Example 8 | inorganic hydrophilic film | fused silica | 15 µm | 150 mass% | 11° | 73° | 3.6 | |

| | | | | | | | | |
|---|---|---|---|---|---|---|---|---|
| * the proportion to the total mass | | | | | | | | |

In Examples 8 and 9, there is no change in contact angle 6 before and after contamination, and almost no odor adsorption is observed. This is because the coating film 4 composed of the water-repellent resin 10 is not affected by adsorption of contaminants. This indicates that application of Examples 8 and 9 to the heat exchanger 1 does not cause a risk of decrease in drainage caused by contamination or spread-out of the condensate water 5. This also indicates that there is almost no odor adsorption. In Comparative Examples 5 to 8, the contact angle 6 before contamination is small, which shows high hydrophilicity, but the contact angle 6 after contamination is large, which shows water repellency. The coating film 4 exhibiting water repellency after contamination has a high possibility of local water repellency in the heat exchanger 1. In the heat exchanger 1 having non-uniform hydrophilicity inside, the condensate water 5 flows poorly, which leads to a decrease in drainage and an increase in airflow resistance. Comparative Examples 5 to 8 also show large odor adsorption. This may be because odor molecules are adsorbed to silica for improving hydrophilicity exposed on the surface. With regard to odor adsorption, the addition of the spherical particles 11 facilitates odor adsorption. This may be because the spherical particles 11 increase the surface area of the coating film 4 and increase the amount of adsorbed odor molecules.

### Examples 10 to 12 and Comparative Examples 9 to 11

The heat exchanger coating compositions of Examples 10 to 12 and Comparative Examples 9 to 11 were prepared by changing the thickener of Comparative Example 8. The coating properties of the heat exchanger coating compositions were evaluated by using the heat exchanger 1 including the fins 3 made of aluminum at a fin pitch of 1.2 mm and the heat transfer tube 2 made of copper. The size of the heat exchanger 1 is 30 mm × 250 mm × 100 mm. The heat exchanger 1 was dipped in the heat exchanger coating composition and then left to stand for about 30 minutes to incline about 60 degrees to the horizontal surface such that the coating composition flows out from between the fins 3 made of aluminum. The condition of the coating film 4 after application was determined from the appearance and the condition of the surface of the cut fin 3. The results are shown in Table 3.

**Table 3]**

| | Thickener | Addition amount * | Contact angle | Condition of application | Note |
|---|---|---|---|---|---|
| Example 10 | xanthan gum | 0.1 mass% | 77° | uniform application | |
| Example 11 | xanthan gum | 0.5 mass% | 78° | uniform application | |
| Example 12 | guar gum | 1.0 mass% | 76° | uniform application | |
| Comparative Example 9 | none | - | 79° | coating film in scale form | no thickener |
| Comparative Example 10 | xanthan gum | 1.5 mass% | 72° | bridging | excess thickener |
| Comparative Example 11 | guar gum | 2.0 mass% | 73° | bridging | excess thickener |

The contact angles 6 in Examples 10 to 12 do not change from that in Comparative Example 9 free of thickeners, which indicates that the addition of the thickener does not affect the hydrophilicity of the surface. Comparative Examples 10 and 11 containing a large amount of the thickener show very low hydrophilicity. In Comparative Example 9, the uniform coating film 4 is formed on the entire surface of the heat exchanger 1, but it is found that the spherical particles 11 are unevenly distributed in the form of scales from observation of the surface of the fin 3 made of aluminum. In Comparative Examples 10 and 11, the uniform coating film 4 is formed, but bridging formed by drying the heat exchanger coating composition accumulating between the fins 3 is observed. This is because the coating composition was too viscous to suitably apply. In all of Examples 10 to 12, the coating film 4 is uniform, and no bridging occurs, which shows that the suitable coating film 4 can be formed.

### LIST OF REFERENCE SIGNS

- 1: heat exchanger
- 2: heat transfer tube
- 3: fin
- 4: coating film
- 4a: coating film
- 4b: coating film
- 5: condensate water
- 6: contact angle
- 7: protrusion
- 8: aqueous dispersion
- 10: water-repellent resin
- 11: spherical particles

## Claims

1. A heat exchanger coating composition comprising:
an aqueous dispersion having a water-repellent resin containing spherical particles with an average particle size of 2 µm or more and 50 µm or less.

2. The heat exchanger coating composition of claim 1,
wherein the spherical particles are inorganic particles.

3. The heat exchanger coating composition of claim 2,
wherein the inorganic particles are fused silica or fused alumina.

4. The heat exchanger coating composition of claim 1,
wherein the spherical particles are metal particles.

5. The heat exchanger coating composition of claim 1,
wherein the spherical particles are resin particles.

6. The heat exchanger coating composition of claim 5,
wherein the resin particles are made of methacrylic resin, polystyrene resin, silicone resin, or phenolic resin.

7. The heat exchanger coating composition of any one of claims 1 to 6,
wherein a contact angle between the water-repellent resin and water at an endpoint of water when water forms on the water-repellent resin is 30 degrees or more and 100 degrees or less.

8. The heat exchanger coating composition of any one of claims 1 to 7,
wherein the water-repellent resin is alkyd resin, urethane resin, polyolefin resin, polyvinyl chloride resin, ester resin, epoxy resin, acrylic resin, silicone resin, or fluororesin.

9. The heat exchanger coating composition of any one of claims 1 to 8,
wherein an average value of distances between tops of the spherical particles is 2 µm or more and 500 µm or less.

10. The heat exchanger coating composition of any one of claims 1 to 9,
wherein an amount of the spherical particles added is 30 mass% or more and 200 mass% or less relative to the water-repellent resin.

11. The heat exchanger coating composition of any one of claims 1 to 10,
wherein an amount of the spherical particles and the water-repellent resin added is 5 mass% or more and 40 mass% or less relative to a total mass of the coating composition.

12. The heat exchanger coating composition of any one of claims 1 to 11,
wherein the aqueous dispersion further contains a thickener that increases viscosity, and an amount of the thickener added is 0.01 mass% or more and 1 mass% or less relative to a total mass of the coating composition.
